# EUROPEAN PATENT APPLICATION

(11) **EP 2 136 578 A1**
(43) Date of publication of application: **23.12.2009**
(21) Application number: 08158470.8
(22) Date of filing: 18.06.2008
(51) Int. Cl.: H04W 4/02, H04L 29/08

(54) **Communication technique for coordinating service utilization**

(71) Applicant: TELIASONERA AB, 10663 Stockholm (SE)
(72) Inventor: Pihlajamäki, Antti, 00580, Helsinki (FI); Kinnari, Tomi, 02610, Espoo (FI); Laukkanen, Jussi, 00240, Helsinki (FI)
(74) Representative: Virkkala, Jukka Antero

(57) **Abstract**

A communication method for providing a client terminal (10) with information on a local service provided by a service provider (20, 20'). The service provider is associated with a beacon (22, 22') radiating (1-2) a beacon identifier and the client terminal is associated with a community (16) of terminals. The client terminal detects (1-4) the radiated beacon identifier and utilizes it in a request for service details to a local service server (30). The local service server (30) which utilizes the beacon identifier to determine the requested service details and the client terminal's entitlement to the local service. The local service (30) server transmits (1-14) the service details to the client terminal. Information on the client terminal's entitlement to the local service is transmitted (1-18, 1-18') to a presence server (40), which relays such information to other terminals (12, 14) of the community (16) associated with the client terminal (10).

## Description

### Background of the invention

The invention relates generally to a communication technique. In particular the invention relates to a communication technique for coordinating utilization of services having two distinctive characteristics. On the one hand, the services coordinated by the invention are location-dependent. In other words, the services available to a potential service user depend on the user's location. On the other hand, the services coordinated by the invention are community-related, which means that the utilization of a service by one member of a community is of interest to the other members of the community.

An illustrative but non-exhaustive list of location-dependent services includes services which can be utilized only at a predefined location (or within a predefined service area) and services, such as information, whose contents depend on the user's location. For example, a mobile subscriber visiting a zoo might be entitled to see facts and videos of the animals.

An illustrative but non-restrictive example of a community-related service is a services which multiple users can obtain at a price which is lower than the single-user price for each individual service user. For example, restaurants or movie theatres may offer meals or tickets at a reduced price for multiple consumers.

It should be understood that some exemplary services are described only to facilitate understanding the technical problems and solutions relating to the present invention and its embodiments; the actual business-specific services are beyond the scope of the present invention. A technical problem facing the potential service users, service providers and network operators is that coordination among potential service users is awkward. A potential service user wishing to utilize a service which is both location-dependent and community-related has to invite a sufficient number of members of his/her community to the location where the location-dependent service is being offered. This normally involves numerous voice calls among the community members, only for coordinating the movement of the community members. This is particularly problematic in cases where major public events are being organized irregularly, so that mobile communication networks are not dimensioned to handle the spurious peak loads.

A further problem is that the potential service user may not know what services are being offered near to him/her. Or, if the user knows or speculates that some services are being offered, it is not a straightforward task to retrieve the service details, such as what is being offered, at what price and what options are available. Magazines or web sites are excellent media for conveying detailed information on services, but a problem of magazines and web sites is that they are poorly accessible when the user is away from home or Internet terminal.

### Brief description of the invention

An object of the invention is to develop methods and equipment so as to alleviate one or more of the problems identified above. In other words, the invention aims at improving coordination of service utilization in cases wherein the service being offered is both location-dependent and community-related. The object of the invention is achieved by methods and equipment as specified in the attached independent claims. The dependent claims, the present patent specification and the attached drawings relate to specific embodiments of the invention.

Within the context of the present invention, a location-dependent service means a service which can only be utilized within a predefined service area. It should be understood that location has two different interpretations. Firstly, the service provider provides the service only at certain location, such as a shop, restaurant, theatre, museum, zoo, theme park, or the like. The service area is normally well-defined, such as the area within the walls or borders of the service provider. Secondly, the potential service user's entitlement to the service is determined by the user's location. However, there are no feasible, universally-applicable techniques for determining whether or not the potential service user is within the precise perimeter of the service area. Instead, the potential service user's location is determined by utilizing the subscriber's mobility-supporting terminal ("client terminal") and some form of short-range radiation from a beacon located within or near the service area, whereby the detection of the short-range radiation by the client terminal serves as an indication that the client terminal is within the service area or in close proximity to it. Thus, while the service provider's service area is typically well defined, the potential service user's location can only be estimated but not measured accurately. Therefore the service area, as specified by the service provider, and the user's presence in the service area, as determined by communication technology, may not coincide perfectly.

In many situations the less-than-perfect match between the service area and the user's location, as estimated by the communication technology, is of no consequence. From the point of view of the service provider, the user's presence within the service area is determined positively if the user can request the service from service personnel, and the entitlement to use the service is determined by a separate purchase transaction. From the point of view of the other members in the user's community, the service user's approximate presence in the service area means that the user can be found by going to the service area. But there may be situations in which the user's presence in the service area should be verified independently of the detection of the short-range radiation. For instance, a shop owner may attract potential customers to the shop by providing free communication time for mobile subscribers visiting the shop. No purchase transaction is required to obtain the free communication time, which means that a fraudulent user might be able to falsify or duplicate the detection of the short-range radiation and obtain such free communication time without actually visiting the shop. Accordingly, some embodiments of the invention aim at improving robustness against such fraudulent behaviour.

An aspect of the invention is a communication method for providing a client terminal with information on at least one local service which is provided by a service provider. The method comprises associating the client terminal with a community of terminals. The method further comprises associating the service provider with at least one beacon which radiates a beacon identifier. As used herein, a beacon means a short-range radiator, such as short-range radiator of electromagnetic radiation. By way of example, the beacon can be a conventional mobile network base station with a short range, a WLAN base station, a Bluetooth transmitter or an infrared transmitter, to name just a few of the possible technologies. The short range of the one or more beacons approximately and sufficiently coincide with service area of the service provider. Both of the above-mentioned associations, namely the first association of the client terminal with the community of terminals and the second association between the beacon identifier (or some derivative of it) and the service provider, can be implemented as computer-readable data structures, and the present invention does not require any direct physical coupling between the associated elements.

Detection of the radiated beacon identifier at the client terminal serves as an indication that the client terminal is at least in close proximity to the service area. Accordingly, the client terminal utilizes the beacon identifier (or some derivative of it) in a request for service details which the client terminal sends to a local service server. The local service server receives the request for service details from the client terminal and utilizes the beacon identifier or its derivative to determine the client terminal's entitlement to the at least one local service and the requested service details. The server providing the functionality of the invention can be an external server that, for example, may offer a web interface via which service providers can enter service-related data. In this case, the beacon ID can be used to identify the data to be retrieved. The operator's macro network can also be used for data access to the server.

It should be understood that the present invention does not relate to the business-specific services, and the service operator may require additional acts, such as a business transaction, from the service user. Rather the present invention relates to communication techniques used in coordination of location-dependent community-related services, and the local service server's determination relating to the user's entitlement to use the services only matters as regards the question of whether it is worthwhile to provide the client terminal with service details and/or to alert the other members of the user's community.

The method further comprises transmitting the requested service details to the client terminal which utilizes the transmitted service details by displaying them on its user interface, for example. In addition, the method comprises transmitting information on the client terminal's entitlement to the at least one local service via a presence server to one or more terminals of the community associated with the client terminal.

A benefit of the invention is reduction of human interaction in coordination of service utilization wherein the service is both location-dependent and community-related.

Other aspects of the invention include a communication server, which implements the above-described local service server. The local service server may comprise the above-described presence server or co-operate with an external presence server. While these two servers are logically distinct units, they can be implemented either as two physically distinct network elements or as one integrated network element. Yet another aspect of the invention is a server client software which is operable to direct the client terminal to implement the above-specified functionality relating to the client terminal.

As stated earlier, a residual problem is that fraudulent users may falsify or copy detected beacon identifiers and utilize more services than they are actually entitled to. In order to provide increased robustness against such behaviour, an embodiment of the invention further comprises verifying the client terminal's entitlement to the at least one local service by utilizing location-dependent information which is additional to the beacon identifier and independent from it. For instance, such verifying may comprise utilizing the client terminal's identifier (eg subscriber identity or equipment identity or some temporary identity) in a location query to a mobility-supporting communication network serving the client terminal. Particularly in embodiments, which implement the verification by the location-dependent information which is additional to the beacon identifier and independent from it, it is not necessary for the client terminal to transmit full the beacon identifier to the local service server, and a simplified derivative suffices. For example, each of the beacon identifiers may include a country code and a network operator code, which ensure globally unique beacon identifiers. However, the client terminal does not have to transmit the country code of the beacon identifier to the local presence server because the country code can be obtained via the additional location verification.

As stated earlier, the invention involves a presence server. When the client terminal is entitled to use a local service, the presence server notifies other terminals of the community associated with the client terminal. The users of the other terminals of the community obtain information on the client terminal's presence in a local service area completely automatically. Communication overhead may be minimized by sending such notifications in the form of connectionless messages, such as short messages, multimedia messages, datagrams, or the like.

In some embodiments it is the client terminal, under control of the service client software, that informs the presence server about the client terminal's entitlement to the local service. In other embodiments the local service server may transmits information on the client terminal's entitlement to the local service to the presence server.

### Brief description of the drawings

In the following the invention will be described in greater detail by means of specific embodiments with reference to the attached drawings, in which:
Figure 1 is a combined block diagram and signal flow diagram, which illustrates the layout and operation of an embodiment of the invention;
Figure 2 is a schematic block diagram of a representative client terminal; and
Figure 3 shows a variation of the block diagram/signal flow diagram shown in Figure 1.

### Detailed description of specific embodiments

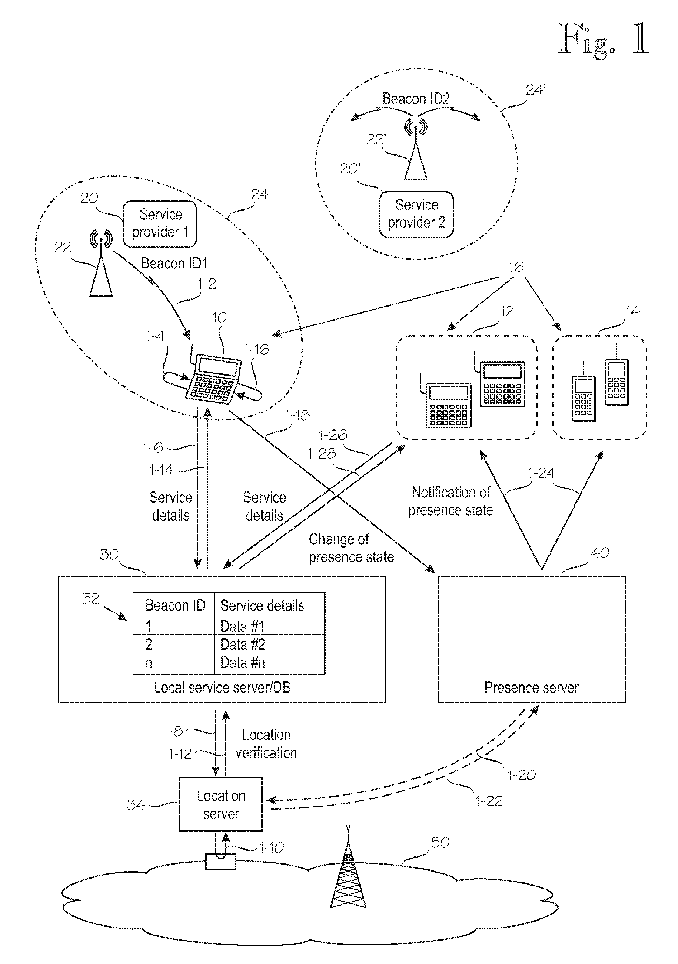

Figure 1 shows certain terminals and servers which will be used to describe an embodiment of the invention. Reference numeral 10 denotes an exemplary client terminal. The client terminal 10 can be virtually any mobile terminal, such as a cellular telephone complemented with an service client software which implements the terminal-related functionality provided by the present invention, as will be explained later in more detail.

Reference numeral 20 denotes a first local service provider. The local service provider 20 provides services which are logically classified as "local". As to the question of what makes a service "local", the principal criterion is not a physical radius from some reference point. Instead the local nature of a service is determined by the logical borders of the service provider's domain. For example, each of several neighbouring shops or restaurants can provide services which are local to a specific shop or restaurant, in which case the entire area of each local service fits within a circle or polygon whose dimensions are in the order of 10 meters. On the other hand, the local services offered by a zoo may require a radius of several kilometres.

In order to determine whether or not the exemplary client terminal 10 is within the local service area of the local service provider 20, the local service provider 20 is associated with one or more beacons 22 which emit some form of radiation, the range of which approximately corresponds to the local service area 24 of the service provider 20. Each beacon radiates a beacon identifier which identifies the beacon. In a straightforward implementation, the identification of the beacon can be ensured by specifying that each beacon identifier is unique. For instance, Beacon ID1 uniquely identifies beacon 22.

There may be any number of other service providers 20', each with their associated beacons 22' and local service areas 24'. The client terminal 10 is able to receive the identifier of the beacon within the service area in which the client terminal 10 is located. However, the beacon identifiers as such do not describe the services provided by the service provider 20, 20'. In order to obtain a detailed service description, the client terminal 10 is provided with a service client software which direct the client terminal 10 to consult a local service server 30, which has an associated service database 32. Upon receiving a detected beacon identifier (or some derivative of it) from the client terminal, the local service server 30 queries the service database 32 to obtain a detailed service description of the service(s) provided by the service provider 20 associated with the beacon 22 that emitted the beacon identifier, which the client terminal transmits to the local service server 30. Reference numeral 34 denotes a location server, which the local service server 30 queries to verify that the client terminal 10 is entitled to use the local service(s) provided by the service provider's server 30.

Reference numeral 40 denotes a presence server, which will be used to notify other client terminals 12, 14, of the presence of the client terminal 10 within the local service area of the service providers 20, 20'. The client terminals 10, 12 and 14 form a logical community 16 in the sense that the presence of the client terminal 10 within the local service area of the service providers 20, 20' should be notified to other client terminals within the same logical community. For example, the subscribers or users of the terminals 10, 12 and 14 may be friends, relatives, classmates, work- or hobby-related associates, or the like. The significance of the logical community 16 formed by the terminals 10, 12 and 14 is such that the presence of at least one terminal of the community 16 within the local service area of the service providers is presumably useful information to the entire community.

In addition to the elements described above, a mobility-supporting communication network 50, such as a mobile network or a Mobile IP (Internet Protocol) network provides inter-element communication capability to the elements shown in Figure 1 and described above, particularly as regards communication to/from the terminals 10, 12, 14.

Arrows with reference signs 1-2 through 1-28 relate to the operation of the system shown in Figure 1 in a representative implementation. In step 1-2, the beacon 22 transmits a unique Beacon ID1, which is received by the client terminal 10. In step 1-4 the client terminal 10 processes the Beacon ID1. The processing in step 1-4 may include checking that the client terminal 10 has not used the same beacon identifier to request service details for a predetermined period of time, such as 24 hours, for example. The reason for such a waiting period is twofold. The service providers 20, 20' may wish to set an upper limit, such as one for each 24-hour period, to the number of local services for each period of time. Furthermore the client terminal would waste resources by endlessly requesting service details which it already has. After the processing in step 1-4 the client terminal 10 determines that the Beacon ID1 indicates that the client terminal 10 is within the service area of the local service server 20. In step 1-6 the client terminal 10 requests detailed information on the local service from the local service server 30. The local service server 30 detects the request for detailed service information but may not respond immediately. Instead the server 30 may query the location server 34 in step 1-8, to ensure that the client terminal 10 is entitled to use the local service(s) provided by the local service server 30. In one illustrative but non-restrictive implementation, such a determination is based on the cell ID of the client terminal 10. In step 1-10 the location server 34 processes the query and consults the communication network 50. In an illustrative implementation, the location server 34 sends an identifier of the client terminal 10 or a subscription associated with it to the communication network 50. The communication network 50 returns some data which directly or indirectly indicates the location of the client terminal 10. Illustrative examples of a direct location indication include geographical coordinates, the name of the town or suburb, or the like. On the other hand an illustrative example of an indirect location indication is an identifier of the cell of the client terminal 10 or an identifier of a network element serving the client terminal, in which case the indirect location indication can serve as a parameter in a table look-up which yields the client terminal's location. In step 1-12 the location server 34 responds to the query it received in step 1-8. Herein it is assumed that the location server 34 confirms the presence of the client terminal 10 within the local service area 24 of the service provider 20. The local service server 30 receives the confirmation from the location server 34 and responds to the client terminal 10 in step 1-14. The response 1-14 from the local service server 30 indicates the service details which the client terminal 10 requested in step 1-6. For instance, the service details can contain a free-format text field which describes the local service(s). Alternatively or additionally, the response 1-14 from the local service server 30 may indicate an address, such as an URI/URL (uniform resource identifier/locator), wherein further service details are available.

In step 1-16 the client terminal 10 processes the information it received in step 1-14. For instance, the client terminal 10 may access the URI/URL of the local service in order to utilize the local service or to obtain more information on the local service. Alternatively or additionally the client terminal may display the service details on its user interface. A detailed description of such service utilization is omitted because of the wide variety of imaginable local services. In step 1-18 the client terminal 10 notifies the presence server 40 of its presence within the service area 24 of the service provider 20.

Reference numerals 1-20 and 1-22 denote two optional steps in which the presence server 40 consults the location server 34, in order to determine which of the terminals 12, 14 are located such that it is worthwhile to notify their users of the presence of terminal 10 in the service area 24. A benefit of this optional query operation is further optimization of network resources, in view of the fact that it makes little sense to report the location and service entitlement of one community member to another community member who is in a different region altogether.

In step 1-24 the presence server 40 notifies the presence of the client terminal 10 within the service area 24 to the logical community 16 of the terminal 10. Alternatively, if the optional location consultation in steps 1-20 and 1-22 is performed, the presence server 40 notifies those terminals which are located such that their users can potentially utilize information on the location of terminal 10.

The logical community 16 includes two kinds of terminals which are denoted by reference numerals 12 and 14. Reference numeral 12 denotes terminals having service clients compatible with the full functionality of the present invention, including the ability to retrieve service details from the local service server 30, while reference numeral 14 denotes client terminals without such service clients. In steps 1-26 and 1-28 the client terminals 12 with the compatible service client software respectively request and obtain the service details from the local service server 30. These steps may be implemented similarly to the above-described steps 1-6 and 1-14, apart from the fact that in step 1-6, the transmission of the service detail request from the terminal 10 was responsive to the detection of the Beacon ID1 from the beacon 22, while in step 1-26 the transmission of the service detail request from the terminals 12 is responsive the notification from the presence server 40, which notification indicates the presence of another terminal of the community, namely the terminal 10, within service area 24 of the service provider 20.

Exemplary embodiments for implementing steps 1-2, 1-6 and 1-14 are disclosed in commonly-owned patent application PCT/F13007/050574, which is based on Finnish priority application F130065677.

In a representative but non-restrictive embodiment, the one or more beacons 22 may be implemented as short-range radio or microwave transmitters. A non-exhaustive list of appropriate technologies includes Bluetooth, WLAN (Wireless Local Area Network), WiMAX (Worldwide Interoperability for Microwave Access) or RFID (Radio Frequency IDentification). Alternatively or additionally, the beacon(s) 22 may utilize other types of short-range transmission can be used, depending on the detection capability of the exemplary client terminal 10. If the client terminal 10 is capable of detecting infrared radiation, for example, the beacon(s) 22 may define the range of local service by transmitting infrared radiation.

In connection with steps 1-8 through 1-12 it was stated that the location server 34 may utilize the client terminal's cell identifier to verify the client terminal's within the local service area 24 of the service provider 20. In one implementation the client terminal 10 itself provides the cell identifier in the request 1-6 for service details. However, an implementation which is more robust against tampering is achieved if the location server 34 uses the client terminal's identifier to request the client terminal's cell identifier from the communication network 50. The improved robustness is due to the fact that the client terminal 10 cannot falsify its own identifier because if it did, it would never receive the service details it is requesting. It is worth noting that the local services provided by the service providers 20, 20' may involve some commercial value, such as two drinks or meals for the price of one, under the proviso that the two drinks or meals are consumed by separate customers.

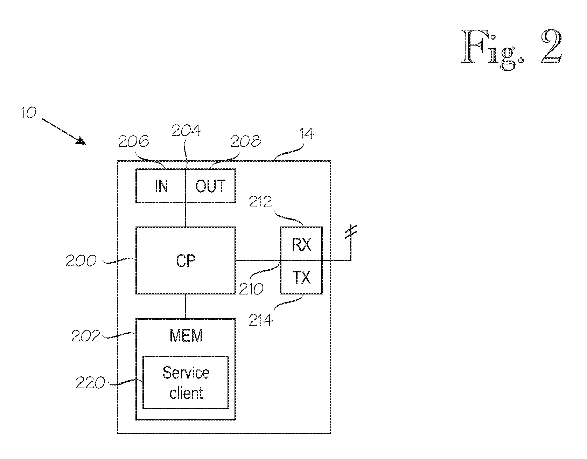

Figure 2 is a schematic block diagram of a representative client terminal. The client terminal comprises a central processing unit (CPU) 200, memory 202, input-output circuitry 204 which constitutes the client terminal's user interface and comprises an input circuitry 206 and an output circuitry 208. The client terminal further comprises reception/transmission circuitry 210 which comprises a transmission circuitry 212, reception circuitry 214 and antenna 216. At this level of generalization, all elements 200 through 214 can be conventional as used in the relevant art.

In addition to the conventional sections, the memory 202 of the client terminal used in some implementations of the present invention comprises a service client software 220 which directs the processor 200 of the client terminal to execute the additional functionality of the present invention and its embodiments.

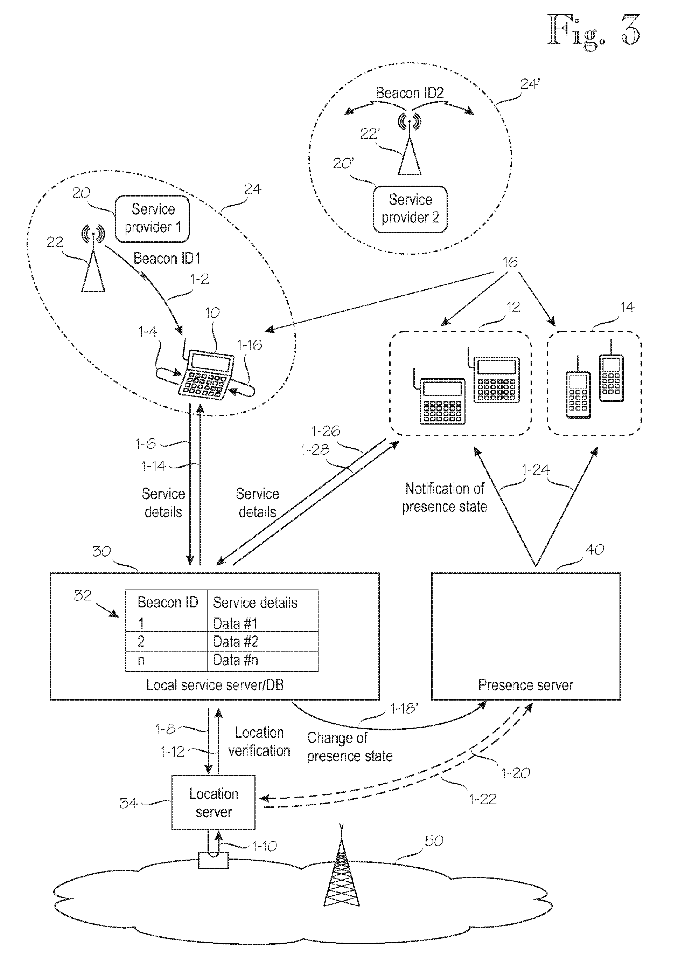

Figure 3 shows a slightly different embodiment in which the information 1-18 on the changed presence state of the client terminal 10 is not sent to the presence server 40 by the client terminal 10. Instead, the information on presence of the client terminal 10 within the service area 24, now denoted by reference numeral 1-18', is sent by the local service server 30. This embodiment may save radio resources and the battery of the client terminal over the one shown in Figure 1.

It is readily apparent to a person skilled in the art that, as the technology advances, the inventive concept can be implemented in various ways. The invention and its embodiments are not limited to the examples described above but may vary within the scope of the claims.

## Claims

1. A communication method for providing a client terminal (10) with information on at least one local service which is provided by a service provider (20, 20'); the method comprising:
- associating the client terminal (10) with a community (16) of terminals;
- associating the service provider (20, 20') with at least one beacon (22, 22') which radiates (1-2) a beacon identifier;
- detecting (1-4) the radiated beacon identifier at the client terminal (10);
- utilizing (1-6), at the client terminal (10), the beacon identifier or its derivative in a request for service details to a local service server (30);
- utilizing, at the local service server (30), the beacon identifier or its derivative to determine the requested service details and the client terminal's entitlement to the at least one local service;
- transmitting (1-14) the requested service details to the client terminal (10);
- utilizing, at the client terminal (10), the transmitted service details;
- transmitting (1-18, 1-18') information on the client terminal's entitlement to the at least one local service to a presence server (40); and
- transmitting (1-24) information on the client terminal's entitlement to the at least one local service from the presence server (40) to one or more terminals (12, 14) of the community (16) associated with the client terminal (10).

2. A communication method according to claim 1, further comprising verifying (1-8 ... 1-12) the client terminal's entitlement to the at least one local service by utilizing location-dependent information which is additional to the beacon identifier and independent from it.

3. A communication method according to claim 2, wherein said verifying comprises utilizing the client terminal's identifier in a location query to a mobility-supporting communication network (50) serving the client terminal (10).

4. A communication method according to any of the preceding claims, wherein the client terminal (10) transmits (1-18) information on the client terminal's entitlement to the at least one local service to the presence server (40).

5. A communication method according to any of the preceding claims, wherein the local service server (30) transmits (1-18') information on the client terminal's entitlement to the at least one local service to the presence server (40).

6. A communication method according to any of the preceding claims, wherein the step of transmitting (1-24) information on the client terminal's entitlement from the presence server (40) to one or more terminals (12, 14) of the community (16) is responsive to a location query to a location server (34) in respect of the terminals (12, 14) of the community (16); wherein the location query indicates which of the terminals (12, 14) of the community (16) are located within a predetermined distance from the client terminal (10).

7. A communication server for providing a client terminal (10) with information on at least one local service which is provided by a service provider (20, 20'), the communication server comprising:
- means for associating the client terminal (10) with a community (16) of terminals;
- means for associating the service provider (20, 20') with at least one beacon (22, 22') which radiates (1-2) a beacon identifier;
- means for receiving a request (1-6) for service details from the client terminal (10), the request for service details indicating the radiated beacon identifier or some derivative of it;
- means for utilizing the beacon identifier or its derivative to determine the requested service details and the client terminal's entitlement to the at least one local service;
- means for transmitting (1-14) the requested service details to the client terminal (10); and
- means for initiating a service information transmission (1-18, 1-18', 1-24) via a presence server (40) to one or more terminals (12, 14) of the community (16) associated with the client terminal (10), the service information transmission indicating the client terminal's entitlement to the at least one local service.

8. A communication server according to claim 7, further comprising means for verifying (1-8 ... 1-12) the client terminal's entitlement to the at least one local service by utilizing location-dependent information which is additional to the beacon identifier and independent from it.

9. A communication server according to claim 8, wherein said means for verifying comprises means for utilizing the client terminal's identifier in a location query to a mobility-supporting communication network (50) serving the client terminal (10).

10. A server client software (220) for a client terminal (10), which comprises a memory (202) for storing applications and data; a processor (200) for executing the stored applications; an input/output section (204) for providing a user interface; and a reception/transmission circuitry (210) for providing a communication interface to one or more communication networks;
wherein the server client software (220) causes program code portions which, when executed by the processor (200), direct the client terminal (10) to perform the following operations:
- detection (1-4) of a radiated beacon identifier at the client terminal (10), wherein the beacon identifier identifies a beacon associated with a service provider (20, 20');
- utilization (1-6) of the beacon identifier or its derivative in a request for service details to a local service server (30);
- reception (1-14) of the requested service details; and
- utilization of the transmitted service details.

11. A client terminal (10), which comprises a memory (202) for storing applications and data; a processor (200) for executing the stored applications; an input/output section (204) for providing a user interface; and a reception/transmission circuitry (210) for providing a communication interface to one or more communication networks;
wherein the client terminal (10) further comprises the server client software (220) according to claim 10.
